# EUROPEAN PATENT APPLICATION

(11) **EP 0 522 785 A2**
(43) Date of publication of application: **13.01.1993**
(21) Application number: 92306087.5
(22) Date of filing: 01.07.1992
(51) Int. Cl.: F21K 2/00, C09D 5/22

(54) **Phosphorescent panel**

(30) Priority: 06.07.1991 GB 9114645; 13.11.1991 GB 9124136
(71) Applicant: PILKINGTON PLC, St. Helens, Merseyside WA10 3TT (GB); PILKINGTON GLASS LIMITED, St. Helens, Merseyside WA10 3TT (GB)
(72) Inventor: Jackson, James Roger, Ormskirk, West Lancashire WN8 7ND (GB); Goodall, David Raymond, St. Helens, Merseyside WA11 7NR (GB)
(74) Representative: Pendlebury, Anthony

(57) **Abstract**

A phosphorescent panel with a durable, easy to clean surface comprises a glass pane with an exposed glass surface and a phosphorescent layer behind said surface, wherein said phosphorescent layer incorporates a phosphorescent component having a long persistence time; it is preferred to use a phosphorescent pigment which emits light for at least 30 minutes after the source of excitation is removed.

The phosphorescent layer may comprise a phosphorescent pigment incorporated in a paint formulation, preferably an epoxy paint formulation, applied to the glass; a light reflective coating, for example, white paint may be applied over the phosphorescent layer. Alternatively, the panel may comprise a laminate with an interlayer comprising a phosphorescent pigment cast between glass panes.

The phosphorescent panels are useful in providing emergency light and in the production of signs.

## Description

The invention relates to phosphorescent panels and their production.

The phenomenon of phosphorescence, in which excitation energy is absorbed, stored and emitted long after the exciting energy source has been removed, is well known, and is utilised in the production of phosphorescent signs and markings e.g. to mark escape routes from a building in the event of failure of the lighting systems. The phosphorescence is presently provided by phosphorescent paints or plastics, the former being produced by incorporation of a phosphorescent pigment in a special paint formulation, and the latter being produced by incorporation of a phosphorescent pigment in a plastics composition. Unfortunately, exposed paint and plastics surfaces are subject to soiling (i.e. they get dirty) in use, and are not always easy to clean; they may also have poor fire resistance and, especially if used in public places, are vulnerable to vandalism, especially the application of paint sprays.

An attempt has been made to overcome these difficulties by the use of especially formulated and manufactured phosphorescent ceramic tiles. Unfortunately these are expensive to produce, and the high temperatures required to fire them limit the range of phosphorescent pigments that may be used and are liable to result in a reduction in performance of the phosphorescent pigments employed.

There is a requirement for a phosphorescent sheet material with a durable, easy to clean surface which can be cut to a desired size and shape (thereby avoiding the gaps which inevitably arise with the use of tiles).

We have now found that this requirement may be met by the use of a panel with an exposed glass surface, providing an easy to clean surface, and a phosphorescent layer behind said surface. Because of the high light transmission of glass, the loss of light through protecting the phosphorescent material behind the glass is small, and can readily be compensated by using a small extra quantity of phosphorescent pigment.

According to the present invention there is provided a phosphorescent panel comprising a glass pane with an exposed glass surface and a phosphorescent layer behind said surface wherein said phosphorescent layer incorporates a phosphorescent component having a long persistence time as hereinafter defined.

The expression 'persistence time' is used herein to refer to the time taken for the brightness of the phosphorescent component to decay from its maximum value to 10% of that maximum value after the excitation source is removed; a long persistence time is a time of one second or more. However, while persistence times of one second are long in comparison with persistence times of certain phosphorescent pigments, such as that used in cathode ray tubes, they may be brief compared to the requirements of panels in accordance with the invention, and the preferred phosphorescent pigments used in the practice of the present are pigments which emit light for at least 30 minutes after the source of excitation is removed. It is preferred to use LUMILUX N pigments (LUMILUX is a trade mark) available in commerce from Riedel-de Haën of Seelze, Germany; such LUMILUX N pigments have a zinc sulphide base, with copper/cobalt activators. A range of emission colours, including green, red and yellow is available depending on the particular pigment chosen. It is preferred to use the phosphorescent pigment at a density of over 100 grams per square metre of panel; the density will normally be in the range 200 to 1000 grams per square metre and, for optimum results, consistent with reasonable costs, it is usually preferred to operate at a pigment density in the range 250 grams per square metre to 500 grams per square metre.

The panel may comprise a pane coated on its rear surface with a phosphorescent coating. If "safety" properties are required, the pane may be toughened, either before or after coating (although once toughened, it cannot of course be cut), or laminated to a second ply of glass or other material. The phosphorescent coating may comprise a phosphorescent pigment applied in a suitable paint medium which is then allowed to dry and/or cure on the glass, for example, an epoxy resin, polyurethane based resin or silicone resin formulation or a fluoropolymer such as Lumiflon (trade mark) a fluoropolymer material available in UK from ICI plc. Such a paint is preferably, but not necessarily, applied by spraying.

The light emittance of the panel may be enhanced by providing a light reflective layer, for example a light reflective coating which may be applied over the phosphorescent layer, behind the phosphorescent coating; it is preferred to use a white paint formulation, which both enhances the light emission and protects the phosphorescent coating. The white paint may be applied over a phosphorescent paint formulation after the latter has dried and/or at least partially cured.

In a further embodiment of the invention, the panel comprises a glass front pane and a rear ply bonded to said front pane by a phosphorescent polymeric interlayer. The rear ply may also be of glass, and this is particularly advantageous if it is desirable for the panel to emit light on both sides (when the panel is not required to emit light on both sides, there will usually be little advantage in using a rear glass ply, and indeed an opaque layer may be incorporated behind the phosphorescent layer so that the panel is opaque).

In the embodiment comprising a glass front pane and a rear ply bonded thereto by a phosphorescent interlayer, the interlayer may comprise a phosphorescent pigment dispersed in a polymer, for example an acrylic or acrylic/polyester polymer, and the laminate may conveniently be produced by casting a liquid resin containing a phosphorescent pigment between the glass front pane and a rear ply and curing the resin in situ to bond the glass front pane to the rear ply.

Thus, according to a further aspect of the invention, there is provided a method of preparing a laminated phosphorescent panel comprising forming an envelope comprising a glass pane and a rear ply in substantially parallel opposed spaced relationship, filling said envelope with a curable liquid resin comprising a phosphorescent pigment dispersed therein and curing said resin.

The resin may be any resin useful for the production of "cast-in-place" laminates and compatible with the phosphorescent pigment, for example a silicone resin, an epoxy resin, an acrylic resin or an acrylic/polyester resin (such as Synolite - trade mark - available from DSM Resins UK Ltd). To keep the phosphorescent pigment dispersed in the resin, an anti-settling agent may be used; particulate siliceous materials, for example, fumed silica, precipitated silica, micronised silica and fibrous calcium silicate have been found useful for this purpose.

The glass pane of the panel of the present invention (or, in the case of a panel comprising a laminate of two glass panes, the front glass pane) may, if desired, be of wired glass to enhance the fire resistance of the panel.

The use of wired glass may also be advantageous in improving the safety properties of the product especially in a monolithic rather than a laminated glass product (since the latter would generally have adequate safety properties as a result of the lamination without the need for using wired glass). The wired glass may be polished or "as cast".

There is no special requirement for the composition of the glass panes used in the present invention, and they will usually (although not necessarily) be composed of conventional soda lime silica glass containing at least 10% by weight of sodium oxide.

The invention is illustrated but not limited by the following examples which describe the production of phosphorescent panels in accordance with the invention.

### Example 1

A pane of clear 6 mm float glass 1m x 1m was edge-worked, washed and dried. The clean dry glass was primed on one face using Beta Wipe (Beta Wipe is a trade mark for a silane adhesion promoter available in commerce from Gurit-Essex) and the primed surface was sprayed with a dispersion of 400 grams of Lumilux Green NF pigment in Ceramite 21 clear epoxy resin (Ceramite is a trade mark for an epoxy resin paint available in commerce from England, Hughes and Bell) and the resulting coating was allowed to cure in air for twenty four hours to provide a cured coating 250 microns thick.

A white paint formulation (white Ceramite 21 from England, Hughes and Bell) was then sprayed over the resultant phosphorescent coating to provide protection against atmospheric moisture and abrasion resistance, and cured in air. As well as protecting the phosphorescent coating, the paint enhanced the luminosity of the product. The resulting product was a 1m square phosphorescent panel with an easy to clean glass front surface and a protected phosphorescent layer on the rear surface. It was capable of lamination to other plies to give a safety glass product, and could be cut to size as desired.

On illuminating the product through its glass front surface with a tungsten lamp and then switching off the illumination, the panel was found to have a luminosity (yellow green phosphorescence) of 400 millicandelas per square metre at the time of switch off, decaying to 10 millicandelas per square metre after 10 minutes and 2 millicandellas per square metre after 30 minutes.

### Example 2

Two panes of clear 3 mm float glass each 1m x 1m were washed and a butyl tape 1.8 mm thick applied to the major face of one pane around the marginal periphery leaving a 75 mm gap adjacent one corner. The second pane was laid over the first pane in opposed facing relationship, being spaced from the first pane by the butyl tape, and the panes secured together by spaced clamps around their periphery to form an envelope between them.

A curable liquid resin mix was prepared comprising Lumilux Green NF pigment dispersed in a polymethylmethacrylate resin (Naftolan - trade mark - resin available in commerce from Chemetall AG) with approximately 25% by weight, based on the weight of the mix, of particulate fumed silica as an anti-settling agent. Sufficient phosphorescent pigment was used to provide a concentration of 400 grams pigment per square metre of the laminated product.

The glass envelope prepared as described above was secured flat on a tilting table and, with the table vertical and the gap in the butyl tape at the top of the glass envelope, the liquid resin comprising the phosphorescent pigment and anti-settling agent was pumped into the envelope through the gap in the tape. The table (and hence the resin filled envelope) was then tilted to the horizontal and the gap in the tape border sealed with an additional length of tape. The liquid resin was then allowed to cure at room temperature with the envelope horizontal.

The resulting laminate constituted a phosphorescent panel with an easy-to-clean exposed glass surface on each side.

On illuminating the product through either glass face with a tungsten lamp and then switching off the illumination, the panel was found to have a luminosity (yellow green phosphorescence) on each side of 400 millicandelas per square metre at the time of switch off, decaying to 10 millicandelas per square metre after 10 minutes and 2 millicandellas per square metre after 30 minutes.

The products of the present invention are useful in providing emergency lighting and/or signs e.g. markings to indicate a safe exit when power supplies fail. They can be produced in stock sizes and cut down to give any required size (unless, of course, the glass is toughened, in which case it must be cut to size before toughening). They provide an easy-to-clean surface from which soiling and paint markings may be removed relatively easily giving a product with a potentially long lifetime even in dusty conditions, e.g. underground railways.

Moreover, while the products described herein include continuous uniform phosphorescent layers, it will be appreciated that patterned layers may be used if desired e.g. in the provision of signs. Such patterns may be provided by spraying a phosphorescent coating through a stencil, or by screen printing a dispersion containing a phosphorescent pigment onto the glass surface e.g. a ceramic frit containing a phosphorescent pigment dispersed therein: in this case, the glass would be heated after printing to fire the ceramic frit (and a phosphorescent pigment resistant to the firing conditions should be used) and, if desired, may then be quenched rapidly to give a toughened glass product.

Alternatively, the effect of a patterned layer, for example for a sign, may be achieved by placing an appropriate mask or stencil over a panel having a continuous uniform patterned layer, or incorporating such a mask or stencil in the product in front of the phosphorescent layer.

## Claims

1. A phosphorescent panel comprising a glass pane with an exposed glass surface and a phosphorescent layer behind said surface, wherein said phosphorescent layer incorporates a phosphorescent component having a long persistence time as herein defined.

2. A panel according to claim 1 comprising a glass pane coated on its rear surface with a phosphorescent coating.

3. A panel according to claim 2 wherein the phosphorescent coating comprises a phosphorescent pigment in a cured epoxy resin.

4. A panel according to claim 2 or claim 3 comprising a light reflective coating over the phosphorescent coating.

5. A method of preparing a panel according to claim 2 which comprises spraying a phosphorescent paint formulation onto a major surface of a glass pane.

6. A method according to claim 5 wherein the paint formulation comprises a phosphorescent pigment dispersed in an epoxy resin.

7. A method according to claim 5 or claim 6 which comprises spraying a white paint formulation over a phosphorescent paint formulation after the latter has dried and/or at least partially cured.

8. A panel according to claim 1 comprising a laminate with a glass front pane and a rear ply bonded to said glass pane by a phosphorescent plastics interlayer.

9. A panel according to claim 8 wherein the rear ply is a second glass pane.

10. A panel according to claim 8 or claim 9 wherein the interlayer comprises a phosphorescent pigment dispersed in a polymer.

11. A panel according to claim 10 wherein the polymer is an acrylic polymer.

12. A method of preparing a panel according to claim 8 comprising forming an envelope comprising a glass pane and rear ply in substantially parallel opposed spaced relationship, filling said envelope with a curable liquid resin comprising a phosphorescent pigment dispersed therein and curing said resin.

13. A method according to claim 12 wherein the resin additionally comprises a particulate siliceous material as an anti-settling agent.

14. A phosphorescent panel prepared by a method according to any of claims 5 to 7, 12 and 13.
